# EUROPEAN PATENT SPECIFICATION

(11) **EP 2 036 769 B1**
(45) Date of publication and mention of the grant of the patent: **08.02.2012**
(21) Application number: 08016021.1
(22) Date of filing: 11.09.2008
(51) Int. Cl.: B60Q 1/12

(54) **Lamp system and lamp deflection control method**
Lampensystem und Verfahren zur Steuerung der Lampenlichtausrichtung
Système de lampe et procédé de contrôle de l'orientation d'une lampe

(30) Priority: 14.09.2007 JP 2007239065; 01.09.2008 JP 2008223338
(43) Date of publication of application: 18.03.2009
(73) Proprietor: Koito Manufacturing Co., Ltd., Tokyo 108-8711 (JP)
(72) Inventor: Yamazaki, Masashi c/o Koito Manufacturing Co.,Ltd., Shizuoka-shi, Shizuoka (JP)
(74) Representative: Grünecker, Kinkeldey, Stockmair & Schwanhäusser

(56) References cited:
- EP-A- 1 316 474
- EP-A- 1 757 486
- US-A- 4 908 560

## Description

Systems and methods consistent with the present invention relate to lamps and, more particularly, to headlamps of vehicles and to control of lamp deflection according to changes in a steering angle of the vehicle.

Document EP-A-1 757 486 already discloses such a lamp system comprising a processing section to determine whether a steering angle of a steering wheel of a vehicle is within or outside a range to be ignored and to set an output steering angle depending on whether the steering angle is within or outside the range to be ignored, a deflection angle calculation section to calculate a deflection angle based on the output steering angle and a swivel control section to control an irradiation direction of a lamp of the vehicle in accordance with a deflection angle, wherein the range to be ignored comprises a reference value and wherein a reference value is changed and the reference value is output as the output steering angle to the deflection angle calculation section.

Adaptive Front-Lighting Systems (AFS) have been proposed to control the irradiating direction of headlamps in right and left directions so as to follow the steering angle of a steering wheel, thereby enhancing safety while driving a vehicle. According to this system, in addition to the straight-ahead direction, the irradiating direction of the headlamps can be changed to a direction in which the driver steers the vehicle, that is, a direction in which the driver intends to drive the vehicle, and in this respect, this lamp system is effective in enhancing safety in driving the vehicle.

In addition, in recent years, an AFS-applied lamp system has been proposed in which not only the steering angle, but also the vehicle speed, is detected so that the irradiating direction of the headlamps is made to match more accurately the conditions in which the vehicle is running by controlling the deflection of the irradiating direction of the headlamps based on the detected vehicle speed and steering angle (*see, e.g.,* JP 2005-29080 A).

In such an AFS-applied lamp system in which a vehicle speed is taken into consideration, the irradiating direction of the headlamps is changed based on the steering angle of the steering wheel. However, there is a deviation between the actual steering angle and a direction of the steered vehicle wheels as the result of a backlash in a gear mechanism arranged between the steering wheel and the vehicle wheels. In other words, there is some play in the steering mechanism. Because of this play, there is a problem that, even when the steering wheel is slightly turned in a range in which the vehicle wheels are not actually steered, the irradiating direction of the headlamps is changed.

To address this problem, it has been proposed to set a range which is ignored so that the irradiating direction of the headlamps does not change when the steering wheel is turned within an angle included in the range-to-be-ignored (*see, e.g.,* JP 5-92738 A). As described in JP 2005-29080 A, the range-to-be-ignored changes as the vehicle speed changes. More specifically, the range-to-be-ignored at a low vehicle speed is set larger than that at a high vehicle speed so that the irradiating direction of the headlamps does not change when the steering angle slightly changes when the vehicle is traveling straight-ahead at a low speed. Moreover, as described in JP 5-92738 A, while fluctuation of the irradiating direction of the headlamps during a straight-ahead travel is prevented, a range-to-be-ignored is also set for situation when the steering wheel is turned in a reverse direction at a certain steering angle from the previous direction. The range-to-be-ignored for the reverse turning of the steering wheel is set narrower than the range-to-be-ignored for the straight-ahead travel so that tracking of the irradiating direction of the headlamps at the time of reversely turning the steering wheel becomes higher than tracking of the irradiating direction of the headlamps during straight-ahead travel.

The range-to-be-ignored set for straight-ahead travel is effective in preventing a change of the irradiating direction of the headlamps in response to a slight change of the steering angle from 0 degrees, that is, when the vehicle is traveling straight ahead. However, when the vehicle travels along a curved road, the range-to-be-ignored for straight-ahead travel does not function because the steering angle deviates from 0 degrees and is outside the range-to-be-ignored. Therefore, when the steering wheel is slightly turned during a cornering operation, the irradiating direction of the headlamps follows the slight changes of the steering angle of the steering wheel, which reduces safety and creates discomfort for the driver. Although the change of the irradiating angle of the headlamps in response to a slight reverse turning of the steering wheel is prevented in the configuration described in JP 5-92738 A, fluctuation of the irradiating direction of the headlamps in response to slight changes of the steering angle in a cornering direction cannot be prevented.

It is the object of the present invention to overcome the abovementioned problems.

This object is met by the features of claims 1 and 8. Preferred embodiments are shown in the sub-claims.

The present disclosure describes a lamp system and a lamp deflection control method which can prevent, at any steering angle, changes in an irradiating direction of a lamp caused by slight changes in the steering angle.

According to an aspect of the present invention, a lamp system includes a processing section which determines whether the steering angle of a steering wheel of a vehicle is within or outside range-to-be-ignored and sets an output steering angle depending on whether the steering angle is within or outside the range-to-be-ignored. The system includes a deflection angle calculating section which calculates a deflection angle based on the output steering angle, and a swivel control section which controls an irradiating direction of a lamp of the vehicle in accordance with the deflection angle. The range-to-be-ignored includes a reference value. If the steering angle is determined to be outside the range-to-be-ignored, the processing section changes the reference value to change the range-to-be-ignored such that the steering angle is included within the range-to-be-ignored, and outputs, as the output steering angle, the reference value to the deflection angle calculating section.

According to another aspect of the present invention, a method for controlling a deflection of a lamp includes obtaining a steering angle of a steering wheel of the vehicle, determining whether the steering angle is within or outside a range-to-be-ignored, setting an output steering angle depending on whether the steering angle is within or outside the range-to-be-ignored, calculating a deflection angle based on the output steering angle, and controlling an irradiating direction of the lamp in accordance with the deflection angle. The range-to-be-ignored includes a reference value. If the steering angle is determined to be outside the range-to-be-ignored, the method further includes changing the reference value to change the range-to-be-ignored such that the steering angle is included within the range-to-be-ignored, and setting the output steering angle includes setting the reference value as the output steering angle.

Other aspects and advantages of the invention will be apparent from the following description, the drawings and the claims.

Fig. 1 is a block diagram of a lamp system according to an embodiment of the present invention;
Fig. 2 is a sectional view, taken along a vertical plane, of a right headlamp according to an embodiment of the present invention;
Fig. 3 is a flowchart of a lamp deflection control process according to background art helpful to understand the present invention;
Fig. 4 is an example of a timing chart of the lamp deflection control process according to background art helpful to understand the present invention.
Fig. 5 is a flowchart of a lamp deflection control process according to a second example corresponding to background art helpful to understand the present invention;
Fig. 6 is an example of a timing chart of the lamp deflection control process according to the second example.
Fig. 7 is a flowchart of a lamp deflection control process according to a third embodiment of the present invention.
Fig. 8 is an example of a timing chart of the lamp deflection control process according to the third embodiment; and
Fig. 9 is an enlarged view of a region S2 of Fig. 8.

### FIRST EXAMPLE

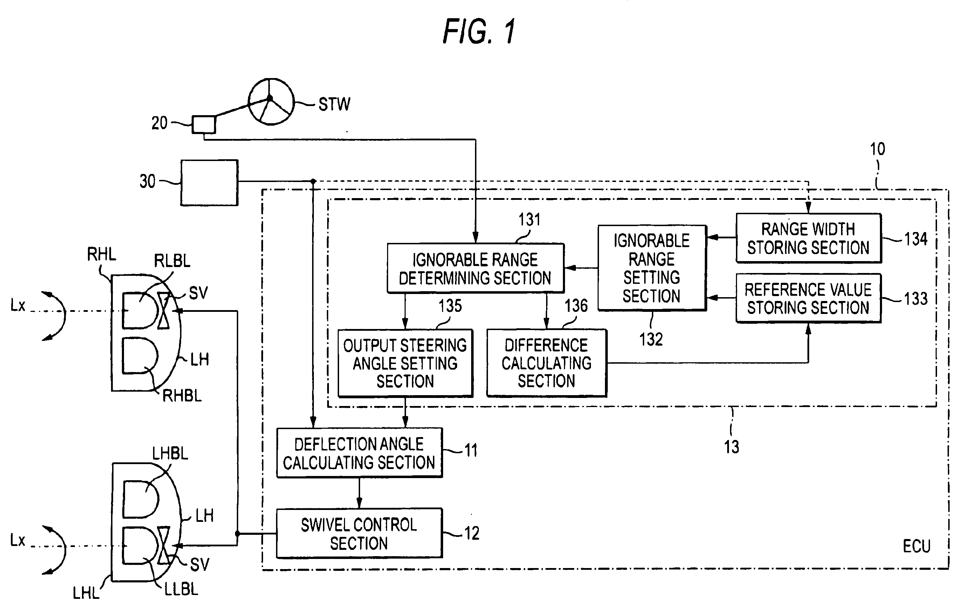

Fig. 1 illustrates a lamp system according to an embodiment of the present invention, including right and left vehicle headlamps RHL, LHL. The right-side headlamp RHL and the left-side headlamp LHL have basically the same configuration. Each of the headlamps RHL, LHL includes a lamp housing LH, a respective low-beam lamp RLBL, LLBL, which is a projector-type lamp unit configured to illuminate a low-beam light distribution pattern and is accommodated inside the housing LH, and a respective high-beam lamp RHBL, LHBL which is a lamp unit configured to illuminate a high-beam light distribution pattern and is also accommodated inside the housing LH. The low-beam lamps RLBL, LLBL are configured to be controllable by corresponding swivel mechanisms such that an irradiating direction Lx thereof is horizontally deflected in right and left directions.

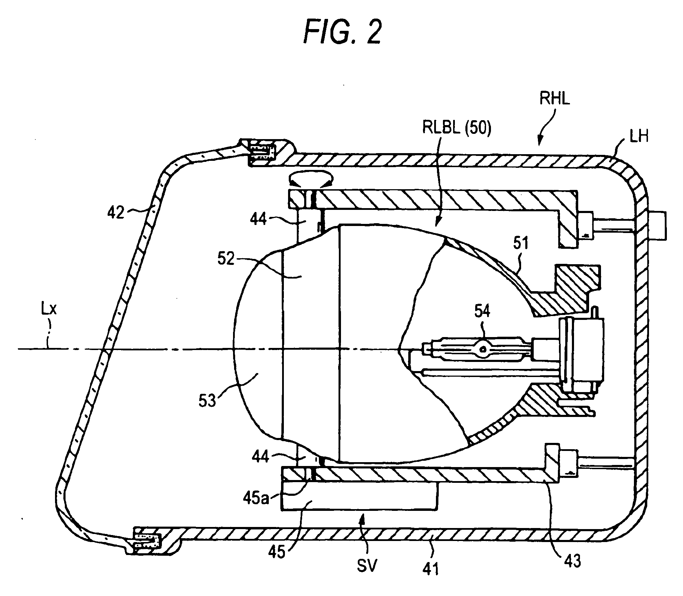

Fig. 2 is a schematic sectional view showing the low-beam lamp RLBL and the corresponding swivel mechanism SV of the right-side headlamp RHL. The lamp housing LHL includes a lamp body 41 having an opening on a front side, and a transparent cover 42 attached to the opening of the lamp body 41. A lamp 50 (i.e., the low-beam lamp RLBL) is a projector-type and is rotatably supported by a C-shaped bracket 43 which is fixed inside the lamp housing LH. More specifically, the projector-type lamp is supported on upper and lower rotational shafts 44 so as to be horizontally rotatable in the right and left directions. The lamp 50 includes a semi-ellipsoidal reflector 51, an annular spacer 52, a collective convex lens 53, and a light source 54 such as a discharge bulb. An actuator 45, which is a part of the swivel mechanism SV, is fixed to a lower surface of the bracket 43. The actuator 45 has a motor as its drive source. A rotational output shaft 45a of the actuator 45 is coupled to a lower end portion of the rotational shaft 44. The actuator 45 is driven in accordance with an input of a deflection control signal, which will be described later, to swivel the lamp 50 (i.e., the low-beam lamp RLBL) horizontally in the right and left directions around the rotational shafts 44, whereby an optical axis of the lamp (i.e., the irradiating direction Lx) is deflected. The left-side headlamp LHL is controlled in a similar manner as explained above with respect to the right-side headlamp RHL.

As shown in Fig. 1, the swivel mechanisms SV of the right and left headlamps RHL, LHL are coupled to an Electronic Control Unit (ECU) 10, and right and left deflecting operations of the respective headlamps RHL, LHL are controlled by the ECU 10. A steering angle sensor 20, which detects the steering angle of a steering wheel STW, and a vehicle speed sensor 30, which detects the vehicle speed, are coupled to the ECU 10. The ECU 10 controls the swivel mechanisms SV based on a steering angle signal from the steering angle sensor 20 and a vehicle speed signal from the vehicle speed sensor 30 so as to control the light emitting direction Lx of the low-beam lamps RLBL, LLBL.

The ECU 10 includes a deflection angle calculating section 11 and a swivel control section 12. The deflection angle calculating section 11 calculates a deflection angle of the irradiating direction Lx of the low-beam lamps RLBL, LLBL (i.e., an angle formed between the irradiating direction Lx of the low-beam lamps RLBL, LLBL and a straight-ahead travel direction of the vehicle) based on the steering angle signal from the steering angle sensor 20 and the vehicle speed signal from the vehicle speed sensor 30. The swivel control section 12 receives a deflection angle signal indicative of the deflection angle from the deflection angle calculating section 11, and provides a swivel control signal to control the swivel mechanisms SV in accordance with the deflection angle calculated by the deflection angle calculating section 11. The swivel control signal is provided to the swivel mechanisms SV of the respective headlamps RHL, LHL, whereby the irradiating direction Lx of the low-beam lamps RLBL, LLBL is controlled to be directed toward a direction of the deflection angle calculated by the deflection angle calculating section 11.

The ECU 10 further includes an "ignorable range" processing section 13 which processes the steering angle signal from the steering angle sensor 20 in accordance with a range-to-be-ignored before the signal is provided to the deflection angle calculating section 11. The ignorable range processing section 13 includes an ignorable range determining section 131, an ignorable range setting section 132, a reference value storing section 133 in which a reference value of the range-to-be-ignored is stored, a range width storing section 134 in which widths of the range-to-be-ignored on respective sides of the reference value are stored, an output steering angle setting section 135 and a difference calculating section 136. The ignorable range determining section 131 determines whether a steering angle, which is information carried by the steering angle signal, is within the range-to-be-ignored. The range-to-be-ignored is entered into the ignorable range determining section 131 from the ignorable range setting section 132. The ignorable range setting section 132 sets the range-to-be-ignored in accordance with the reference value stored in the reference value storing section 133 and the widths of the range-to-be-ignored stored in the range width storing section 134. In the first embodiment, the reference value is a center value of the range-to-be-ignored and, therefore, the widths of the range-to-be-ignored on the respective sides of the reference value are equal. The output steering angle setting section is coupled to the ignorable range determining section 131. If the ignorable range determining section 131 determines that the steering angle is within the range-to-be-ignored, the output steering angle setting section 135 outputs the reference value as an output steering angle. On the other hand, if the ignorable range determining section 131 determines that the steering angle is outside the range-to-be-ignored, the difference calculating section 136 calculates a difference of the steering angle from the range-to-be-ignored, and outputs the difference to the reference value storing section 133.

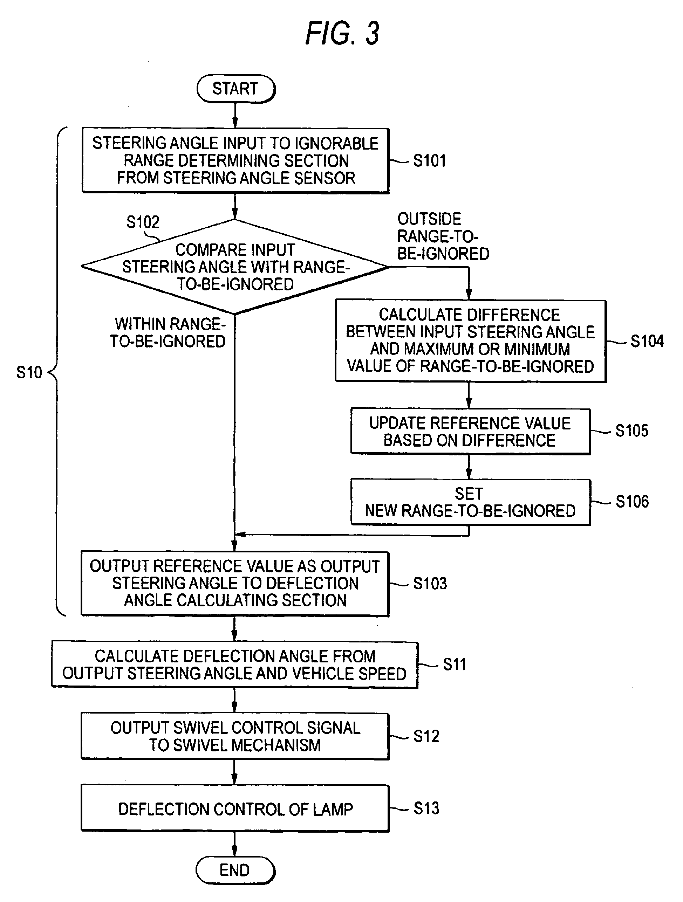

Operations for controlling the irradiating direction Lx of the headlamps RHL, LHL with the AFS-applied headlamp system having the foregoing configuration will be described below. As shown in the flowchart of Fig. 3 which does not correspond to the present invention before calculating the deflection angle based on the steering angle and the vehicle speed, processing (S10) of the range-to-be-ignored is executed in the ignorable range processing section 13 with respect to the steering angle signal.

The ignorable range processing S10 includes entering the steering angle, which is the information carried by the steering angle signal from the steering angle sensor 20, to the ignorable range determining section 131 (S101), and comparing the input steering angle with the range-to-be-ignored in the ignorable range determining section 131 (S102). In the following description, relative terms such as larger or smaller will be used to compare the steering angle and the range-to-be-ignored with the steering angle corresponding to straight-ahead travel being set as 0 degrees. If the steering angle is within a range from a minimum value of the range-to-be-ignored to a maximum value of the range-to-be-ignored, including the maximum and minimum values of the range-to-be-ignored, the steering angle is determined to be within the range-to-be-ignored. On the other hand, if the steering angle is larger than the maximum value of the range-to-be-ignored or smaller than the minimum value of the range-to-be-ignored, the steering angle is determined to be outside the range-to-be-ignored.

If it is determined that the steering angle is within the range-to-be-ignored, the reference value stored in the reference value storing section 133 is output as the output steering angle (S103). On the other hand, if it is determined that the steering angle is outside the range-to-be-ignored, the difference between the steering angle and the range-to-be-ignored is calculated (S104), and the reference value stored in the reference value storing section 133 is updated (changed) based on the calculated difference (S105), More specifically, in a case in which the steering angle is larger than the maximum value of the range-to-be-ignored, the difference is obtained by subtracting the maximum value of the range-to-be-ignored from the steering angle, and the difference is fed back to the reference value storing section 133 and is added to the reference value so that the reference value is increased by an amount equal to the difference. In a case in which the steering angle is smaller than the minimum value of the range-to-be-ignored, the difference is obtained by subtracting the minimum value of the range-to-be-ignored from the steering angle (in this case, the resulting value becomes a negative value), and the difference is fed back to the reference value storing section 133 and is added to the reference value so that the reference value is reduced by an amount equal to the difference. The reference value stored in the reference value storing section 133 is changed in this way, and the ignorable range setting section 132 sets a new range-to-be-ignored based on the reference value so changed and the widths of the range-to-be-ignored stored in the range width storing section 134 (S106). Accordingly, if the steering angle is larger than the maximum value of the range-to-be-ignored, the range-to-be-ignored is shifted in a positive direction by the amount equal to the calculated difference, whereas if the steering angle is smaller than the maximum value of the range-to-be-ignored, the range-to-be-ignored is shifted in a negative direction by the amount equal to the calculated difference.

Because the range-to-be-ignored is changed so as to track the difference between the steering angle and the range-to-be-ignored as described above, the range-to-be-ignored is controlled to include the steering angle. When the ignorable range determining section 131 confirms (determines) that the steering angle is within the range-to-be-ignored, the output deflection angle setting section 135 outputs the reference value as the output steering angle to the deflection angle calculating section 11 (S103). Based on the output steering angle and the vehicle speed which is the information carried by the vehicle speed signal, the deflection angle calculating section 11 calculates a deflection angle (a swivel angle) of the irradiating direction Lx of the low-beam lamps RLBL, LLBL so as to be suitable for the steering angle of the steering wheel STW, and outputs the calculated deflection angle to the swivel control section 12 (S11). Based on the deflection angle input from the deflection angle calculating section 11, the swivel control section 12 generates the swivel control signal indicative of a swivel control amount for deflecting the low-beam lamps RLBL, LLBL in a direction defined by the deflection angle, and outputs the swivel control signal to the swivel mechanisms SV (S12). The swivel mechanisms SV control the corresponding low-beam lamps RLBL, LLBL to be deflected in accordance with the swivel control signal, whereby the irradiating direction Lx of the respective lamps is controlled to be deflected in a direction suitable for real-time running conditions of the vehicle.

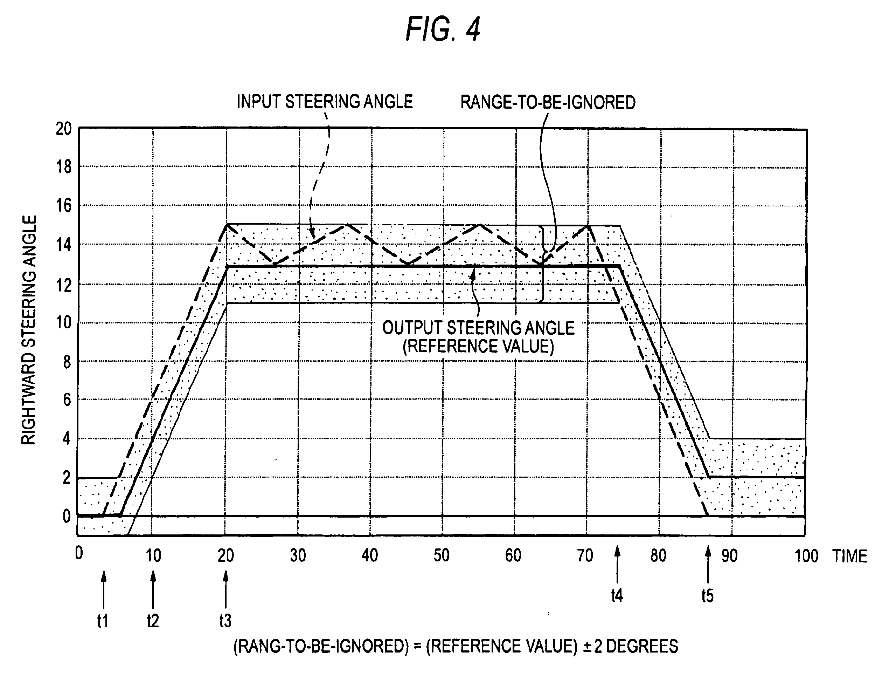

The operations described above will now be explained with reference to the timing chart of Fig. 4 which is background art helpful to understand the present invention. In the example of Fig. 4, a default reference value stored in the reference value storing section 133 is 0 degrees, and the default width of the range-to-be-ignored stored in the range width storing section 134 is ± 2 degrees with respect to the reference value. Further, in the description that follows, a "+" denotes a rightward steering direction and a "-" denotes a leftward direction. Thus, a default range-to-be-ignored set in the ignorable range setting section 131 is a laterally symmetrical angular range with respect to 0 degrees, which is the steering angle during straight-ahead travel, ranging from a 2 degree leftward angle to a 2 degree rightward angle. In Fig. 4, the range-to-be-ignored is illustrated as an obliquely shaded portion.

At a time t1, the steering angle is within the range from -2 degrees to +2 degrees, i.e., within the range-to-be-ignored, so that the reference value stored in the reference value storing section 133, which is 0 degrees, is output as the output steering angle from the ignorable range determining section 131. That is, even if the steering angle changes within the range from -2 degrees to +2 degrees, the output steering angle is maintained as 0 degrees so that the deflection angle calculating section 11 calculates the deflection angle with the output steering angle being 0 degrees. Therefore, the swivel mechanisms SV control the irradiating angle Lx of the lamps (the low-beam lamps RLBL, LLBL of the right and left headlamps RHL, LHL) to be maintained at 0 degrees.

When the steering wheel STW is turned to the right and the steering angle exceeds +2 degrees, the ignorable range determining section 131 determines that the steering angle has deviated from the range-to-be-ignored. In response to this determination, the difference calculating section 136 calculates an amount of the steering angle exceeding the range-to-be-ignored, i.e., the difference. For example, when the steering angle becomes +6 degrees at a time t2, the difference calculating section 136 calculates +6 - (+2) = +4 as the difference and enters this difference of +4 to the reference value storing section 133, whereby +4 degrees is added to 0 degrees, which is the default reference value, so that the reference value is updated to +4 degrees in the reference value storing section 133. Consequently, based on the widths of ± 2 degrees stored in the range width storing section 134 and the updated reference value of +4 degrees, the ignorable range setting section 132 sets a new range-to-be-ignored ranging from +2 degrees to +6 degrees, and outputs the new range-to-be-ignored to the ignorable range determining section 131. Then, in subsequent determinations, the ignorable range determining section 131 compares the input steering angle with this new range-to-be-ignored.

At this point, if the subsequently-detected steering angle is within the range-to-be-ignored ranging from +2 degrees to +6 degrees, the ignorable range determining section 131 determines that the steering angle is within the range-to-be-ignored and outputs the reference value of +4 degrees as the output steering angle. That is, even if the steering angle changes within the range of +2 degrees to +6 degrees, the output steering angle is maintained as +4 degrees so that the deflection angle calculating section 11 calculates the deflection angle with the output steering angle being +4 degrees. Therefore, the swivel mechanisms SV swivels the respective lamps such that the irradiating direction Lx of the lamps is controlled to be deflected at the deflection angle of +4 degrees, i.e., rightwardly 4 degrees.

By continuing the controls described above, when the steering angle changes as indicated by a thick dashed line in Fig. 4, the system causes the range-to-be-ignored to change so as to track the changes of the steering angle as indicated by the obliquely shaded portion. At a time t3, when the steering angle becomes +15 degrees, the range-to-be-ignored is set to a range from +11 degrees to +15 degrees, and even if the steering angle changes within the range from +11 degrees to +15 degrees thereafter, the output steering angle from the output steering angle setting section 131, which is indicated by a thick solid line, is maintained at the reference value of +13 degrees. Therefore, the irradiating direction Lx of the lamps is controlled to be deflected at the deflection angle corresponding to the steering angle of rightwardly 13 degrees.

Further, when the steering wheel is turned back such that the steering angle decreases towards 0 degrees, i.e., towards the straight-ahead traveling direction, the steering angle becomes, for example, +10 degrees at a time t4. Because the steering angle of +10 degrees is smaller than +11 degrees, which is the minimum value of the range-to-be-ignored, the difference between the steering angle of +10 degrees and the minimum value of +11 degrees of the range-to-be-ignored is calculated to be -1 degree by subtracting the minimum value of +11 degrees from the steering angle of +10 degrees, and this difference of -1 degree is added to the reference value of +13 degrees (i.e., 1 degree is subtracted from the reference value of +13 degrees), whereby the reference value becomes +12 degrees. Thus, the range-to-be-ignored is changed to a range from +10 degrees to +14 degrees. As the steering angle gradually decreases, the range-to-be-ignored gradually decreases in this way, and when the steering angle finally becomes 0 degrees at a time t5, the range-to-be-ignored becomes a range from 0 degrees to +4 degrees. At this time, since the reference value is +2 degrees, the output steering angle is maintained as +2 degrees so that the irradiating direction Lx of the lamps is maintained to be directed slightly rightwards, although the steering wheel STW is actually turned back to 0 degrees, i.e., the straight-ahead traveling position. However, this will be corrected when the steering wheel STW is subsequently turned leftwards to exceed the range-to-be-ignored.

While the example in which the steering wheel STW is turned in the + direction (i.e., the rightward direction) and is then turned back has been described above, explanation for a case where the steering wheel STW is turned in the - direction (i.e., the leftward direction) and is then turned back will be similar thereto. In such a case, when the steering angle deviates from the range-to-be-ignored in the - direction, the reference value stored in the reference value storing section 133 changes in the - direction, whereas when the steering angle deviates in the + direction, the reference value changes in the + direction.

As described above, the range-to-be-ignored changes so as to track the steering angle of the steering wheel STW such that the steering angle is included in the range-to-be-ignored. Therefore, the range-to-be-ignored functions with respect to any steering angle. Consequently, even when the steering angle of the steering wheel slightly changes within the range-to-be-ignored during cornering, the irradiating direction Lx of the lamps is prevented from being deflected by the swivel mechanisms SV.

On the other hand, when the driver intentionally turns the steering wheel STW to change the traveling direction of the vehicle, the reference value and the range-to-be-ignored change when the steering angle deviates from the range-to-be-ignored, and in association with this, the output steering angle changes, whereby the deflection control of the irradiating direction Lx of the low-beam lamps is executed. In addition, as the range-to-be-ignored changes so as to track the steering angle, slight changes of the steering angle do not result in a fluctuation of the irradiating direction Lx.

Accordingly, it is possible to prevent fluctuation of the irradiating direction Lx of the lamps with respect to any steering angle (i.e., regardless of the traveling direction of the vehicle) so as to prevent an unsafe driving condition or a disconcerting feeling of the driver.

### SECOND EXAMPLE

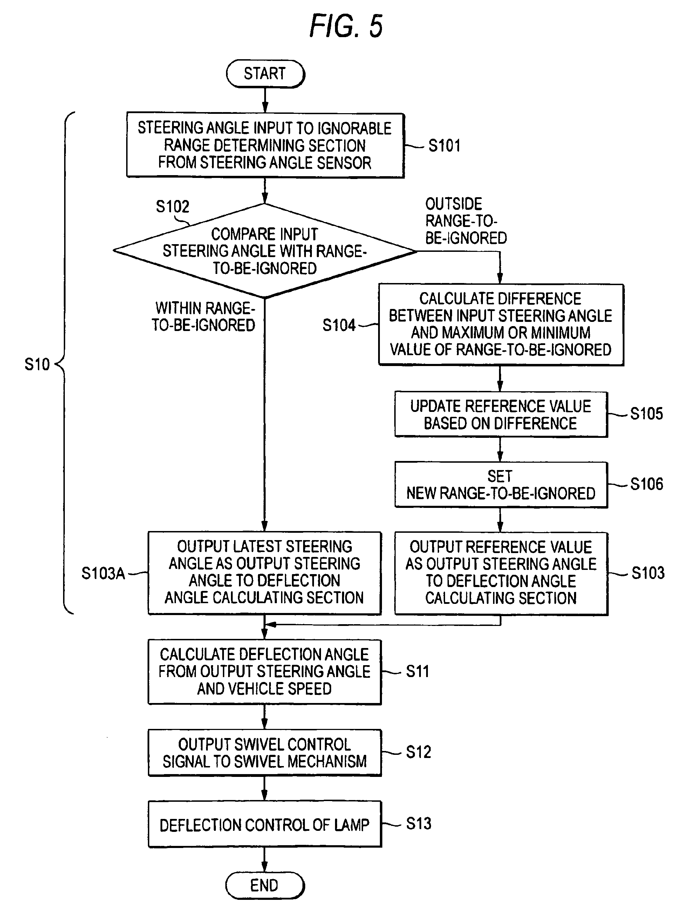

In the first example, at the time t5 in Fig. 4, a deviation corresponding to half of the range-to-be-ignored between the output steering angle and the actual steering angle exists at a point at which the steering wheel is turned back to 0 degrees. A lamp system according to a second example is configured to address this deviation. The configuration of an ECU 10 according to the second example is similar to that of the first example shown in Fig. 1. However, the configuration of an output steering angle setting section 135 is different from the first example. More specifically, as shown in the flowchart of Fig. 5, which is background art and is helpful to understand the invention if it is determined that the steering angle is outside the range-to-be-ignored in S102, the range-to-be-ignored is updated through S104 to as in the first example and the reference value is output as the output steering angle in S103. However, if it is determined that the steering angle is within the range-to-be-ignored in S102, the output steering angle setting section 135 of the second example is configured to output, in S103A, as the output steering angle, a latest steering angle that has been determined by the ignorable range determining section 131 to be outside the range-to-be-ignored (hereinafter, referred to as the latest steering angle). That is, while the steering angle is maintained within the range-to-be-ignored, the output steering angle setting section 135 maintains the latest steering angle as the output steering angle.

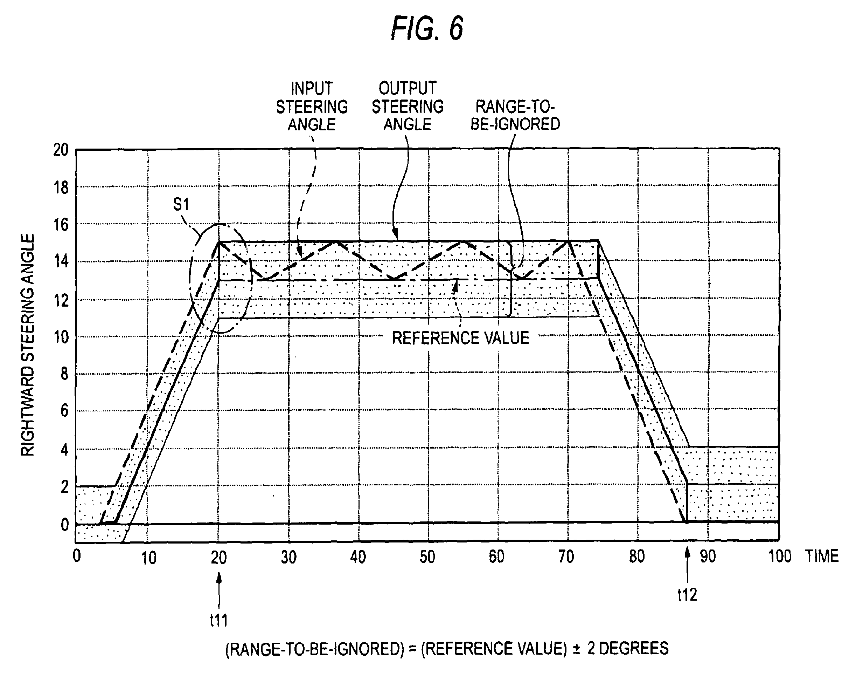

Fig. 6 which is background art is a timing chart of the second example in which the steering angle is changed in the same way as in the first example When the steering angle indicated by a thick dashed line increases from 0 degrees to +15 degrees at a time t11, the range-to-be-ignored is set to range from +11 degrees to +15 degrees, as was the case in the first example. However, thereafter, unless the steering angle deviates from the range-to-be-ignored of +1 degrees to +15 degrees, the output steering angle which is indicated by a thick solid line is fixed to +15 degrees which is the latest steering angle. Accordingly, the irradiating direction Lx of the lamps is maintained at a fixed angle, regardless of a slight change of the steering angle. Subsequently, when the steering angle is reversely turned so that the steering angle deviates from the range-to-be-ignored toward a low-angle direction, the range-to-be-ignored is changed as in the first example. When the steering angle reaches 0 degrees at a time t12, the range-to-be-ignored is set to range from 0 degrees to +4 degrees, and unless the steering angle deviates from this range-to-be-ignored thereafter, the steering angle of 0 degrees which caused the range-to-be-ignored to change to the range from 0 degrees to +4 degrees at the time t12 is maintained as the output steering angle. Accordingly, when the steering wheel is turned back to 0 degrees, the irradiating direction Lx of the lamps is directed to 0 degrees, without being fixed at a direction corresponding to +2 degrees as in the first example.

Also in the second example the range-to-be-ignored changes so as to track the steering angle such that the steering angle is included within the range-to-be-ignored. Thus, the range-to-be-ignored functions at any steering angle. Consequently, even when the steering angle slightly changes within the range-to-be-ignored during the cornering operation of the steering wheel STW, fluctuation of the irradiating direction Lx of the lamps is prevented. In addition, in the second example when the steering wheel is turned back to the straight-ahead traveling position which is 0 degrees, the irradiating direction Lx of the lamps is also directed to the straight-ahead traveling direction, thereby preventing the driver from feeling discomfort.

### THIRD EMBODIMENT (invention)

In the first and second examples, the range-to-be-ignored is changed to track the change of the steering angle. However, when the steering angle is determined to be within the range-to-be-ignored after the change of the steering to a higher angle, the range-to-be-ignored is created in a region on a lower-angle side of the steering angle. Therefore, when the steering angle is changed toward a higher angle direction, in some situations, the steering angle immediately becomes outside the range-to-be-ignored. In such a case, in the lamp system of the first example, the output steering angle is changed in accordance with the change of the reference value. In the lamp system of the second example the output steering angle is immediately changed. Thus, in some cases, the irradiating direction Lx of the lamps becomes unstable. Further, in the lamp system of the second embodiment, the output steering angle sometimes jumps, resulting in an sudden change of the irradiating direction Lx of the lamps. For example, as shown in the region S1 of Fig. 6, when the steering angle is first determined to be within the range-to-be-ignored after the change of the range-to-be-ignored, the output steering angle is changed from the reference value to the latest steering angle. A lamp system according to a third embodiment according to the invention is configured to address the above. That is, in the third embodiment, if it is determined that the steering angle is within the range-to-be-ignored, in a certain situation, the calculation in the difference calculating section 136 is deferred, or the reference value storing section 133 is directly controlled, without the calculation in the difference calculating section 136, to change the reference value stored in the reference value storing section 133.

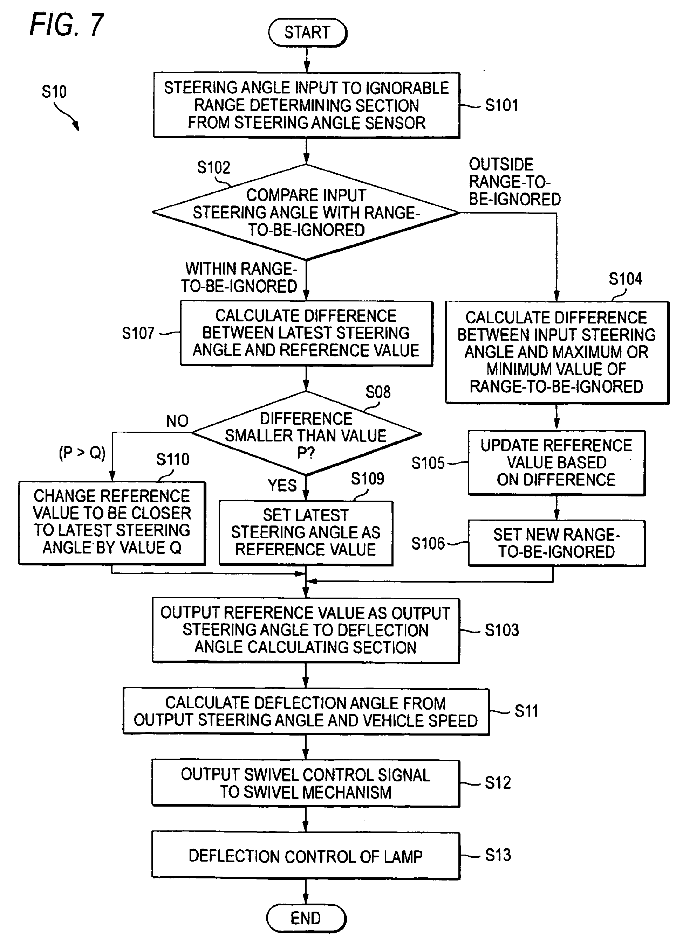

Fig. 7 is a flowchart according to the third embodiment, in which steps that are the same as those in Fig. 3 are labeled with the same number. When it is determined that the steering angle is within the range-to-be-ignored in the ignorable range determining section 131, the ignorable range determining section 131 directly controls the reference value storing section 133 to set the latest steering angle determined to be outside the range-to-be-ignored as the reference value, and outputs the latest steering angle as the output steering angle. This is a similar operation as the first example in that the reference value is maintained at a specific value while the steering angle is within the range-to-be-ignored. However, in the third embodiment, the reference value is set to be the latest steering angle determined to be outside the range-to-be-ignored. In other words, the latest steering angle determined to be outside the range-to-be-ignored is set as the reference value, and like the first embodiment, this reference value is output as the output steering angle

Further, the lamp system of the third embodiment executes a process which prevents the immediate change of the output steering angle when the steering angle is first determined as being within the range-to-be-ignored after the change of the range-to-be-ignored. In detail, when it is determined that the steering angle is within the range-to-be-ignored, the ignorable range determining section 131 updates the reference value stored in the reference value storing section 133 in the following manner. Firstly, a difference between the reference value and the latest steering angle determined as being outside the range-to-be-ignored is obtained (S107). Then, it is determined whether the difference is smaller than a value P or not (S108). When the difference is equal to the value P or more, the reference value is updated such that the reference value becomes closer to the value P by a value Q, which is smaller than P (Q<P) (S110), and this updated reference value is stored in the reference value storing section 133. Thus, the range-to-be-ignored is set in accordance with the updated reference value, and the updated reference value is output as the output steering angle in S103). By repeating the above process, the difference between the reference value and the latest steering angle determined to be outside the range-to-be-ignored is reduced, and eventually becomes smaller than the value P. When it is determined that the difference is smaller than the value P, the reference value is updated to be the latest steering angle determined to be outside the range-to-be-ignored to change (S109), and the range-to-be-ignored is changed accordingly, while the updated reference value is output as the output steering angle. According to the process described above, the reference value and the output steering angle is gradually changed, and eventually becomes equal to the latest steering angle determined to be outside the range-to-be-ignored. Therefore, the change in the irradiating direction Lx of the lamps becomes smoother.

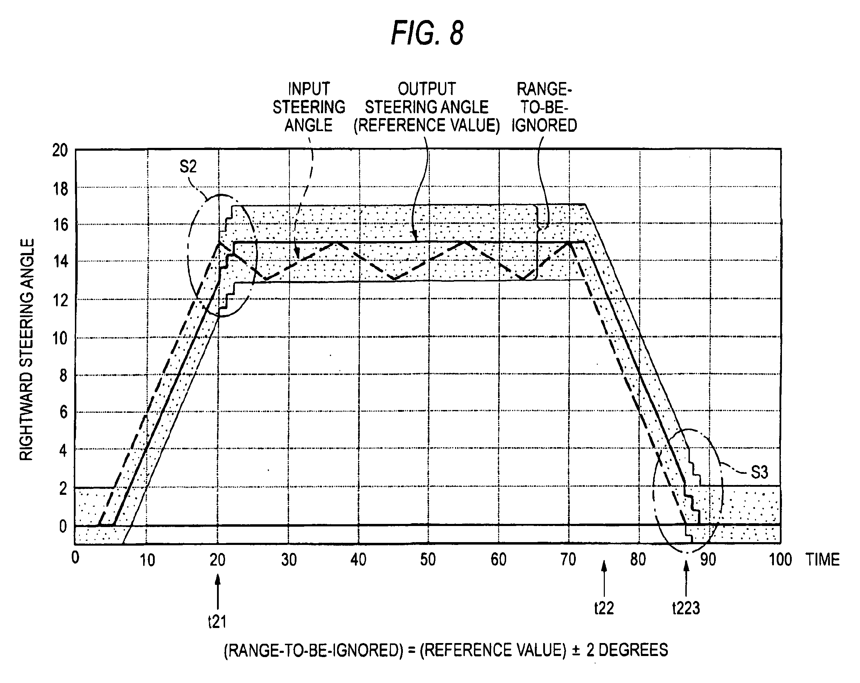

Fig. 8 is a timing chart according to the third embodiment. Until a time t21. the steering angle keeps on deviating from the range-to-be-ignored so that the reference value is increased in accordance with the change of steering angle and the range-to-be-ignored is changed accordingly. When the steering angle is maintained to be within the range-to-be-ignored after the time t2I, the ignorable range determining section 131 updates the reference value in the reference value storing section 133 to be the latest steering angle determined to be outside the range-to-be-ignored, and the output steering angle is output from the output steering angle setting section 135 based on the updated reference value. That is, the latest steering angle determined to be outside the range-to-be-ignored is set as the reference value, and this reference value is output as the output steering angle. In the case of Fig. 8, the latest steering angle determined to be outside the range-to-be-ignored is +15 degrees. Thus, a range ±2 degrees from the reference value, i.e., a range from +13 degrees to +17 degrees is set as the raage-to-be-ignored, and the output steering angle becomes +15 degrees. Therefore, not only when the steering angle is changed in a lower-angle direction within -2 degrees from +15 degrees, but also when the steering angle is changed in a higher-angle direction within +2 degrees from +15 degrees, the output steering angle will not change, whereby the irradiating direction Lx of the lamps is stabilized. When the steering angle deviates from the range-to-be-ignored in the lower-angle direction at a time t22, the range-to-be-ignored is changed to track the steering angle as I the first embodiment. When the steering angle returns to 0 degrees at a time t23, and determined to be within the range-to-be-ignored thereafter, the range-to-be-ignored is set and the output steering angle is output in a similar manner as in a period right after the time t21,

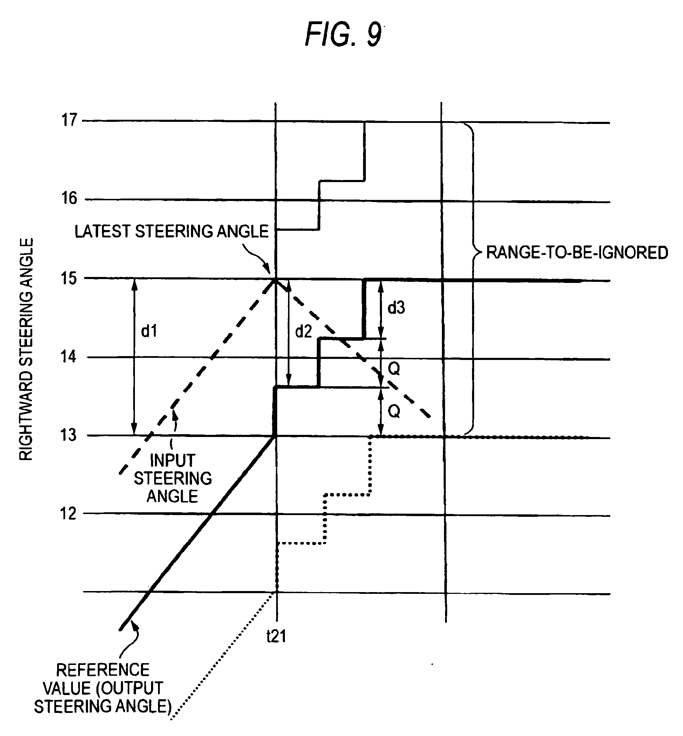

According to the third embodiment, more specifically, when the steering angle is determined to be within the range-to-be-ignored right after the time t21, a difference between the reference value +13 degrees and the latest steering angle of +15 degrees that is determined to be outside range-to-be-ignored is obtained, as shown in Fig. 9 which is an enlarge view of the region S2 in Fig. 8. Because the initial difference d1 = 2 degrees which is larger than a value P (the value P = 1 degrees in this example), a value Q (the value Q = 0.6 degrees in this example) is added to the reference value so as to be closer to the steering angle of +15 degrees, whereby the updated reference value +13.6 degrees is stored in the reference value storing section 133. Based on this updated reference value, the range-to-be-ignored in set, and the output steering angle, which is +13.6 degrees, is output to control the irradiating direction Lx of the lamps. In the next cycle of the flowchart, a difference between the reference value of +13.6 degrees and the latest steering angle of +15 degrees that is determined to be outside the range-to-be-ignored is obtained. Because this difference d2 =1.4 degrees is still larger than the value P = 1 degrees, the value Q = 0.6 degrees is further added to the reference value of +13.6 degrees, whereby the reference value is updated to be +14.2 degrees. Based on this new reference value of +14.2 degrees, the range-to-be-ignored is set, and the output steering angle, which is +14.2 degrees, is output to control the irradiating direction Lx of the lamps again. In the next cycle, the difference d3 between the reference value of +14.2 degrees and the angle of +15 degrees becomes 0.8 degrees which is smaller than the value P = 1 degrees. Therefore, the reference value is set to be +15 degrees which is the latest steering angle that was determined to be outside the range-to-be-ignored. Accordingly, the range-to-be-ignored is set to range from +13 degrees to +17 degrees, and the output steering angle becomes +15 degrees. Because the output steering angle is increased stepwise from 13 degrees to 13.6 degrees, 13.6 degrees to 14.2 degrees, and 14.2 degrees to 15 degrees, the irradiating direction Lx of the lamps is prevented from immediately changing. This is the same in the region S3 of Fig.8 in which the steering angle is returned to 0 degrees.

According to the lamp system of the third embodiment, the advantages of the first embodiment can be obtained. In addition, because the reference value is set to be the latest steering angle determined to be outside the range-to-be-ignored and the range-to-be-ignored is set of the lower-angle side and the higher-angle side of the reference value, the range-to-be-ignored effectively functions even when the steering angle is changed toward the higher-angle direction after being determined to be within the range-to-be-ignored. Therefore, slight changes of the steering angle within the range-to-be-ignored will not affect the control of the swivel mechanism, whereby the fluctuation of the irradiating angle Lx of the lamps is prevented. Further, because the output steering angle becomes the latest steering angle determined to be outside the range-to-be-ignored, the output steering angle can be set to 0 degrees when the steering angle is returned to 0 degrees, as in the second embodiment. In addition, because the jump of the output steering angle right after the steering angle is determined to be within the range-to-be-ignored is prevented, a sudden change in the irradiating angle Lx of the lamps can be prevented. Accordingly, it is possible to improve stability of the control of the irradiating direction Lx of the lamps.

Although the widths of the range-to-be-ignored on the respective sides of the reference value has been explained as being fixed in the range width storing section 134 of the embodiments described above, the widths of the range-to-be-ignored may be changed in accordance with the vehicle speed by entering the vehicle speed signal from the vehicle speed sensor 30 to the range width storing section 134 as shown by a broken line in Fig. 1. For example, the range-to-be-ignored can be reduced when the vehicle speed is high, whereas the range-to-be-ignored can be increased as the vehicle speed decreases. According to this configuration, fluctuation of the irradiating direction of the lamps at low speeds where the steering angle is changed by a relatively large amount can be prevented.

Further, although the range-to-be-ignored is set to be symmetrical with respect to the reference value in the ± directions, i.e., the right and left direction, so that the reference value is the center value in the ignorable range setting section 132 of the embodiments described above, the range-to-be-ignored can be set to be asymmetrical with respect to the reference value. For example, a width of the range-to-be-ignored on a side of the reference value in which the steering wheel is turned in the right and left directions from the steering angle of 0 degrees (i.e., on a side in which the absolute value of the steering angle increases) can be set larger than a width of the range-to-be-ignored on the other side of the reference value in which the steering wheel is reversely turned towards 0 degrees. According to this configuration, a response of the change in the range-to-be-ignored with respect to the change in steering angle becomes high when the steering wheel is reversely turned so that the response of the change in irradiating direction of the lamps with respect to the change in steering angle also becomes high.

The present invention is not limited to the AFS-applied lamp systems of the embodiments described above. The present inventive concept also can be applied to any lamp systems which control a deflection of the irradiating direction of the lamps in such a manner as to track the change of the steering angle.

Although the description has been made in connection with embodiments of the present invention, those skilled in the art will understand that various changes and modification may be made therein without departing from the present invention. Other implementations are within the scope of the claims.

## Claims

1. A lamp system comprising:
a processing section (13) to determine whether a steering angle of a steering wheel (STW) of a vehicle is within or outside a range-to-be-ignored and to set an output steering angle depending on whether the steering angle is within or outside the range-to-be-ignored;
a deflection angle calculating section (11) to calculate a deflection angle based on the output steering angle; and
a swivel control section (12) to control an irradiating direction (Lx) of a lamp (RLBL, LLBL) of the vehicle in accordance with the deflection angle, wherein the range-to-be-ignored comprises a reference value, and
if the steering angle is determined to be outside the range-to-be-ignored, the processing section (13) changes the reference value to change the range-to-be-ignored such that the steering angle is included within the range-to-be-ignored, and outputs, as the output steering angle, the reference value to the deflection angle calculating section (11),
**characterized in that**
if the steering angle is determined to be within the range-to-be-ignored, the processing section (13) changes the reference value to reduce a difference between the reference value and a latest steering angle determined as being outside the range-to-be-ignored, and outputs, as the output steering angle, the reference value to the deflection angle calculating section (11).

2. The lamp system according to claim 1, wherein, if said difference is smaller than a given value (P), the processing section (13) changes the reference value to be said latest steering angle.

3. The lamp system according to claim 1 or 2, wherein the range-to-be-ignored further comprises a maximum value and a minimum value, and the reference value being between the maximum value and the minimum value, and
if the steering angle is determined to be outside the range-to-be-ignored, the processing section (13) calculates a difference between the steering angle and one of the maximum value and the minimum value that is closer to the steering angle, and adds the difference between the steering angle and said one of the maximum value and the minimum value to the reference value to change the range-to-be-ignored.

4. The lamp system according to claim 3, wherein the reference value is a center value between the maximum value and the minimum value.

5. The lamp system according to any one of claims 1 to 4, further comprising a steering angle sensor (20) to detect the steering angle and output a steering angle signal indicative of the steering angle to the processing section (13).

6. The lamp system according to any one of claims 1 to 5, further comprising a vehicle speed sensor (30) to detect a speed of the vehicle and output a vehicle speed signal indicative of the speed of the vehicle to the deflection angle calculating section (11),
wherein the deflection angle calculating section (11) is arranged to calculate the deflection angle based on the speed of the vehicle in addition to the output steering angle.

7. The lamp system according to claim 6, wherein the speed sensor (30) is arranged to output the vehicle speed signal to the processing section (13), and
the processing section (13) is arranged to change a width of the range-to-be-ignored in accordance with the speed of the vehicle.

8. A method of controlling a deflection angle of a lamp (RLBL, LLBL) of a vehicle, the method comprising:
obtaining a steering angle of a steering wheel (STW) of the vehicle;
determining whether the steering angle is within or outside an range-to-be-ignored;
setting an output steering angle depending on whether the steering angle is within or outside the range-to-be-ignored;
calculating a deflection angle based on the output steering angle; and
controlling an irradiating direction (Lx) of the lamp (RLBL, LLBL) in accordance with the deflection angle, wherein the range-to-be-ignored includes a reference value, and
if the steering angle is determined to be outside the range-to-be-ignored, the method further comprises changing the reference value to change the range-to-be-ignored such that the steering angle is included within the range-to-be-ignored, and setting the output steering angle comprises setting the reference value as the output steering angle,
**characterized in that**
if the steering angle is determined to be within the range-to-be-ignored, the method further comprises changing the reference value to reduce a difference between the reference value and a latest steering angle determined as being outside the range-to-be-ignored, and setting the output steering angle comprises setting the reference value as the output steering angle.

9. The method according to claim 8, wherein, if said difference is smaller than a given value (P), the reference value is changed to be said latest steering angle.

10. The method according to claim 8 or 9 , wherein the range-to-be-ignored further includes a maximum value and a minimum value, the reference value being between the maximum and minimum values, and
wherein changing the reference value comprises:
calculating a difference between the steering angle and one of the maximum and minimum values that is closer to the steering angle; and
adding the difference between the steering angle and said one of the maximum and minimum values to the reference value.

11. The method according to claim 10, wherein the reference value is a center value between the maximum and minimum values.

12. The method according to any one of claims 8 to 11, further comprising obtaining a speed of the vehicle,
wherein calculating the deflection angle is further based on the speed of the vehicle.

13. The method according to claim 12, further comprising changing a width of the range-to-be-ignored in accordance with the speed of the vehicle.

## Patentansprüche

1. Leuchtensystem, das umfasst:
einen Verarbeitungsabschnitt (13), mit dem festgestellt wird, ob ein Lenkwinkel eines Lenkrades (STW) eines Fahrzeugs innerhalb oder außerhalb eines zu ignorierenden Bereiches liegt, und ein Ausgangs-Lenkwinkel in Abhängigkeit davon festgelegt wird, ob der Lenkwinkel innerhalb oder außerhalb des zu ignorierenden Bereiches liegt;
einen Ablenkwinkel-Berechnungsabschnitt (11), mit dem ein Ablenkwinkel auf Basis des Ausgangs-Lenkwinkels berechnet wird; und
einen Schwenk-Steuerabschnitt (12), mit dem eine Strahlrichtung (Lx) einer Leuchte (RLBL, LLBL) des Fahrzeugs entsprechend dem Ablenkwinkel gesteuert wird, wobei der zu ignorierende Bereich einen Bezugswert umfasst, und
wenn festgestellt wird, dass der Lenkwinkel außerhalb des zu ignorierenden Bereiches liegt, der Verarbeitungsabschnitt (13) den Bezugswert ändert, um den zu ignorierenden Bereich so zu ändern, dass der Lenkwinkel in dem zu ignorierenden Bereich eingeschlossen ist, und den Bezugswert als den Ausgangs-Lenkwinkel an den Ablenkwinkel-Berechnungsabschnitt (11) ausgibt,
**dadurch gekennzeichnet, dass**
wenn festgestellt wird, dass der Lenkwinkel innerhalb des zu ignorierenden Bereiches liegt, der Bearbeitungsabschnitt (13) den Bezugswert ändert, um eine Differenz zwischen dem Bezugswert und einem aktuellsten Lenkwinkel zu verringern, für den festgestellt wurde, dass er außerhalb des zu ignorierenden Bereiches liegt, und den Bezugswert als den Ausgangs-Lenkwinkel an den Ablenkwinkel-Berechnungsabschnitt (11) ausgibt.

2. Leuchtensystem nach Anspruch 1, wobei, wenn die Differenz kleiner ist als ein gegebener Wert (P), der Verarbeitungsabschnitt (13) den Bezugswert so ändert, dass er der aktuellste Lenkwinkel ist.

3. Leuchtensystem nach Anspruch 1 oder 2, wobei der zu ignorierende Bereich des Weiteren einen Maximalwert und einen Minimalwert umfasst und der Bezugswert zwischen dem Maximalwert und dem Minimalwert liegt, und
wenn festgestellt wird, dass der Lenkwinkel außerhalb des zu ignorierenden Bereiches liegt, der Verarbeitungsabschnitt (13) eine Differenz zwischen dem Lenkwinkel und demjenigen von dem Maximalwert und dem Minimalwert berechnet, der näher an dem Lenkwinkel liegt, und die Differenz zwischen dem Lenkwinkel und dem Maximalwert oder dem Minimalwert zu dem Bezugswert addiert, um den zu ignorierenden Bereich zu ändern.

4. Leuchtensystem nach Anspruch 3, wobei der Bezugswert ein Wert in der Mitte zwischen dem Maximalwert und dem Minimalwert ist.

5. Leuchtensystem nach einem der Ansprüche 1 bis 4, das des Weiteren einen LenkwinkelSensor (20) umfasst, mit dem der Lenkwinkel erfasst wird und ein Lenkwinkel-Signal, das den Lenkwinkel anzeigt, an den Verarbeitungsabschnitt (13) ausgegeben wird.

6. Leuchtensystem nach einem der Ansprüche 1 bis 5, das des Weiteren einen Fahrzeuggeschwindigkeits-Sensor (30) umfasst, mit dem eine Geschwindigkeit des Fahrzeugs erfasst wird und ein Fahrzeuggeschwindigkeits-Signal, das die Geschwindigkeit des Fahrzeugs anzeigt, an den Ablenkwinkel-Berechnungsabschnitt (11) ausgegeben wird,
wobei der Ablenkwinkel-Berechnungsabschnitt (11) so eingerichtet ist, dass er den Ablenkwinkel zusätzlich zu dem Ausgangs-Lenkwinkel auf Basis der Geschwindigkeit des Fahrzeugs berechnet.

7. Leuchtensystem nach Anspruch 6, wobei der Geschwindigkeitssensor (30) so eingerichtet ist, dass er das Fahrzeuggeschwindigkeits-Signal an den Verarbeitungsabschnitt (13) ausgibt, und
der Verarbeitungsabschnitt (13) so eingerichtet ist, dass er eine Breite des zu ignorierenden Bereiches entsprechend der Geschwindigkeit des Fahrzeugs ändert.

8. Verfahren zum Steuern eines Ablenkwinkels einer Leuchte (RLBL, LLBL) eines Fahrzeugs, wobei das Verfahren umfasst:
Ermitteln eines Lenkwinkels eines Lenkrades (STW) des Fahrzeugs;
Feststellen, ob der Lenkwinkel innerhalb oder außerhalb eines zu ignorierenden Bereiches liegt;
Festlegen eines Ausgangs-Lenkwinkels in Abhängigkeit davon, ob der Lenkwinkel innerhalb oder außerhalb des zu ignorierenden Bereiches liegt;
Berechnen eines Ablenkwinkels auf Basis des Ausgangs-Lenkwinkels; und
Steuern einer Strahlrichtung (Lx) der Leuchte (RLBL, LLBL) entsprechend dem Ablenkwinkel, wobei der zu ignorierende Bereich einen Bezugswert enthält, und
das Verfahren des Weiteren umfasst, dass, wenn festgestellt wird, dass der Lenkwinkel außerhalb des zu ignorierenden Bereiches liegt, der Bezugswert geändert wird, um den zu ignorierenden Bereich so zu ändern, dass der Lenkwinkel in dem zu ignorierenden Bereich eingeschlossen ist, und Festlegen des Ausgangs-Lenkwinkels umfasst, dass der Bezugswert als der Ausgangs-Lenkwinkel festgelegt wird,
**dadurch gekennzeichnet, dass**
das Verfahren des Weiteren umfasst, dass, wenn festgestellt wird, dass der Lenkwinkel innerhalb des zu ignorierenden Bereiches liegt, der Bezugswert geändert wird, um eine Differenz zwischen dem Bezugswert und einem aktuellsten Lenkwinkel zu verringern, für den festgestellt wurde, dass er außerhalb des zu ignorierenden Bereiches liegt, und Festlegen des Ausgangs-Lenkwinkels umfasst, dass der Bezugswert als der Ausgangs-Lenkwinkel festgelegt wird.

9. Verfahren nach Anspruch 8, wobei, wenn die Differenz kleiner ist als ein gegebener Wert (P), der Bezugswert so geändert wird, dass er der aktuellste Lenkwinkel ist.

10. Verfahren nach Anspruch 8 oder 9, wobei der zu ignorierende Bereich des Weiteren einen Maximalwert und einen Minimalwert enthält und der Bezugswert zwischen dem Maximal- und dem Minimalwert liegt, und
Ändern des Bezugswertes umfasst:
Berechnen einer Differenz zwischen dem Lenkwinkel und demjenigen von dem Maximal- und dem Minimalwert, der näher an dem Lenkwinkel liegt; und
Addieren der Differenz zwischen dem Lenkwinkel und dem Maximalwert oder dem Minimalwert zu dem Bezugswert

11. Verfahren nach Anspruch 10, wobei der Bezugswert ein Wert in der Mitte zwischen dem Maximal- und dem Minimalwert ist

12. Verfahren nach einem der Ansprüche 8 bis 11, das des Weiteren Ermitteln einer Geschwindigkeit des Fahrzeugs umfasst,
wobei Berechnen des Ablenkwinkels des Weiteren auf der Geschwindigkeit des Fahrzeugs basiert.

13. Verfahren nach Anspruch 12, das des Weiteren Ändern einer Breite des zu ignorierenden Bereiches entsprechend der Geschwindigkeit des Fahrzeugs umfasst.

## Revendications

1. Système de feu comprenant :
une section de traitement (13) pour déterminer si un angle de braquage d'un volant (STW) d'un véhicule est dans ou en-dehors d'une plage à ignorer et pour déterminer un angle de braquage de sortie selon que le volant est dans ou en-dehors de la plage à ignorer ;
une section de calcul d'angle de déflexion (11) pour calculer un angle de déflexion sur la base de l'angle de braquage de sortie ; et
une section de commande de pivotement (12) pour commander une direction de rayonnement (Lx) d'un feu (RLBL, LLBL) du véhicule en fonction de l'angle de déflexion, dans lequel la plage à ignorer comprend une valeur de référence, et
s'il est déterminé que l'angle de braquage est en-dehors de la plage à ignorer, la section de traitement (13) modifie la valeur de référence pour modifier la plage à ignorer de sorte que l'angle de braquage soit inclus dans la plage à ignorer, et délivre la valeur de référence, en tant qu'angle de braquage de sortie, à la section de calcul d'angle de déflexion (11),
**caractérisé en ce que**
s'il est déterminé que l'angle de braquage est dans la plage à ignorer, la section de traitement (13) modifie la valeur de référence pour réduire une différence entre la valeur de référence et un dernier angle de braquage déterminé comme étant en-dehors de la plage à ignorer, et délivre la valeur de référence, en tant qu'angle de braquage de sortie, à la section de calcul d'angle de déflexion (11).

2. Système de feu selon la revendication 1, dans lequel, si ladite différence est inférieure à une valeur donnée (P), la section de traitement (13) modifie la valeur de référence pour qu'elle soit ledit dernier angle de braquage.

3. Système de feu selon la revendication 1 ou 2, dans lequel la plage à ignorer comprend en outre une valeur maximum et une valeur minimum, et la valeur de référence est entre la valeur maximum et la valeur minimum, et
s'il est déterminé que l'angle de braquage est en-dehors de la plage à ignorer, la section de traitement (13) calcule une différence entre l'angle de braquage et l'une de la valeur maximum et de la valeur minimum qui est plus proche de l'angle de braquage, et ajoute la différence entre l'angle de braquage et ladite une de la valeur maximum et de la valeur minimum à la valeur de référence pour modifier la plage à ignorer.

4. Système de feu selon la revendication 3, dans lequel la valeur de référence est une valeur centrale entre la valeur maximum et la valeur minimum.

5. Système de feu selon l'une quelconque des revendications 1 à 4, comprenant en outre un capteur d'angle de braquage (20) pour détecter l'angle de braquage et délivrer un signal d'angle de braquage indicatif de l'angle de braquage à la section de traitement (13).

6. Système de feu selon l'une quelconque des revendications 1 à 5, comprenant en outre un capteur de vitesse de véhicule (30) pour détecter une vitesse du véhicule et délivrer un signal de vitesse de véhicule indicatif de la vitesse du véhicule à la section de calcul d'angle de déflexion (11),
dans lequel la section de calcul d'angle de déflexion (11) est agencée pour calculer l'angle de déflexion sur la base de la vitesse du véhicule en plus de l'angle de braquage de sortie.

7. Système de feu selon la revendication 6, dans lequel le capteur de vitesse (30) est agencé pour délivrer le signal de vitesse de véhicule à la section de traitement (13), et
la section de traitement (13) est agencée pour modifier une largeur de la plage à ignorer en fonction de la vitesse du véhicule.

8. Procédé de commande d'un angle de déflexion d'un feu (RLBL, LLBL) d'un véhicule, le procédé consistant à :
obtenir un angle de braquage d'un volant (STW) du véhicule ;
déterminer si l'angle de braquage est dans ou en-dehors d'une plage à ignorer ;
déterminer un angle de braquage de sortie selon que l'angle de braquage est dans ou en-dehors de la plage à ignorer ;
calculer un angle de déflexion sur la base de l'angle de braquage de sortie ; et
commander une direction de rayonnement (Lx) du feu (RLBL, LLBL) en fonction de l'angle de déflexion, dans lequel la plage à ignorer comprend une valeur de référence, et
s'il est déterminé que l'angle de braquage est en-dehors de la plage à ignorer, le procédé consiste en outre à modifier la valeur de référence pour modifier la plage à ignorer de sorte que l'angle de braquage soit inclus dans la plage à ignorer, et la détermination de l'angle de braquage de sortie consiste à fixer la valeur de référence en tant qu'angle de braquage de sortie,
**caractérisé en ce que**
s'il est déterminé que l'angle de braquage est dans la plage à ignorer, le procédé consiste en outre à modifier la valeur de référence pour réduire une différence entre la valeur de référence et un dernier angle de braquage déterminé comme étant en-dehors de la plage à ignorer, et la détermination de l'angle de braquage de sortie consiste à fixer la valeur de référence en tant qu'angle de braquage de sortie.

9. Procédé selon la revendication 8, dans lequel, si ladite différence est inférieure à une valeur donnée (P), la valeur de référence est modifiée pour qu'elle soit ledit dernier angle de braquage.

10. Procédé selon la revendication 8 ou 9, dans lequel la plage à ignorer comprend en outre une valeur maximum et une valeur minimum, et la valeur de référence est entre la valeur maximum et la valeur minimum, et
dans lequel la modification de la valeur de référence consiste à :
calculer une différence entre l'angle de braquage et l'une de la valeur maximum et de la valeur minimum qui est plus proche de l'angle de braquage ; et
ajouter la différence entre l'angle de braquage et ladite une de la valeur maximum et de la valeur minimum à la valeur de référence.

11. Procédé selon la revendication 10, dans lequel la valeur de référence est une valeur centrale entre la valeur maximum et la valeur minimum.

12. Procédé selon l'une quelconque des revendications 8 à 11, consistant en outre à obtenir une vitesse du véhicule,
dans lequel le calcul de l'angle de déflexion est en outre basé sur la vitesse du véhicule.

13. Procédé selon la revendication 12, consistant en outre à modifier une largeur de la plage à ignorer en fonction de la vitesse du véhicule.
